# EUROPÄISCHE PATENTSCHRIFT

(11) **EP 1 415 758 B1**
(45) Veröffentlichungstag und Bekanntmachung des Hinweises auf die Patenterteilung: **17.05.2006**
(21) Anmeldenummer: 03025034.4
(22) Anmeldetag: 30.10.2003
(51) Int. Cl.: B23Q 1/54, B23Q 1/00

(54) **Bearbeitungseinheit für eine programmgesteuerte Fräs- und Bohrmaschine**
Working unit for programme-controlled milling and boring machines
Unité d'usinage pour machines à fraiser et à aléser programmable

(30) Priorität: 04.11.2002 DE 10251257
(43) Veröffentlichungstag der Anmeldung: 06.05.2004
(73) Patentinhaber: DECKEL MAHO Pfronten GmbH, 87459 Pfronten (DE)
(72) Erfinder: GEISSLER, Alfred, 87459 Pfronten (DE); JUNG, Robert, 87459 Pfronten (DE)
(74) Vertreter: Beetz & Partner

(56) Entgegenhaltungen:
- EP-A- 0 513 716
- DE-A- 3 932 237
- DE-A- 4 402 084

## Beschreibung

Die Erfindung betrifft eine Bearbeitungseinheit für eine programmgesteuerte Fräs- und Bohrmaschine mit einem in mehreren Koordinatenachsen verfahrbaren Kopfträger, der eine um 45° nach vorne-unten weisende Drehachse enthält, einem stirnseitig am Kopfträger um die 45°-Drehachse verdrehbar angeordneten Schwenkkopf, einem am Schwenkkopf fest montierten Spindelkopf mit einer Arbeitsspindel, deren Achse unter einem Winkel von 45° zur 45°-Drehachse verläuft.

Zur wahlweisen horizontalen oder vertikalen Bearbeitung eines Werkstückes in der gleichen Aufspannung sind seit längerem Bearbeitungseinheiten mit Schwenk- bzw. Drehköpfen bekannt, die eine Arbeitsspindel tragen und deren Achsausrichtung in horizontaler und vertikaler Richtung erlauben.

So ist in der DE 44 02 084 A eine gattungsgemäße Bearbeitungseinheit beschrieben, die ein an einem Maschinenständer verfahrbares Traggehäuse aufweist, an deren gegenüber der Vertikalen um 45° geneigten, schräg nach unten weisenden Stirnwand ein Schwenkfräskopf mit einer ebenfalls unter 45° gegenüber der Vertikalen geneigten Anlagefläche um eine zur Stirnwand senkrechte Achse verdrehbar geführt ist. In dem Schwenkfräskopf ist eine unter 45° zur Drehachse angeordnete Arbeitsspindel gelagert, die durch entsprechende Drehung des Schwenkfräskopfs zwischen einer horizontalen und einer vertikalen Bearbeitungsstellung verschwenkt werden kann. In dem Traggehäuse für den Schwenkkopf ist ein steuerbarer Antriebsmotor angeordnet, dessen zur Drehachse koaxiale Welle die Arbeitsspindel über ein Kegelradpaar und einen Schieberadsatz wahlweise mit zwei verschiedenen Drehzahlen antreibt. Die Welle des Spindelmotors ist als Hohlwelle ausgebildet und umgibt mit Spiel eine das Motorgehäuse und auch den Schwenkkopf durchragende Vollwelle zum Verdrehen des Schwenkkopfes, an deren innerem Ende ein Schneckentrieb und deren äußerem unteren Ende das Gehäuse des Schwenkkopfes befestigt sind. An einem ringförmigen zur 45°-Drehachse koaxialen Endansatz des Schwenkkopfes ist eine Stirnverzahnung ausgebildet und in einer ringförmigen Ausnehmung des Kopfträgers befindet sich eine dazu passende Stirnverzahnung. Durch formschlüssigen Eingriff beider Stirnverzahnungen wird der Schwenkkopf in einer vorgeschriebenen Winkelstellung formschlüssig fixiert. Zu diesem Zweck ist die zentrale Vollwelle axial verschiebbar und über eine Endplatte mit einem elastisch vorgespannten Druckmittelzylinder verbunden. Durch die formschlüssige Fixierung des Schwenkkopfes in vorgegebenen Winkelstellungen ist eine Werkstückbearbeitung nur in vorgegebenen Spindelpositionen bei fixiertem Schwenkkopf möglich. Darüber hinaus ist die zum Fixieren des Schwenkkopfes notwendige Technologie sehr aufwendig.

Aufgabe der Erfindung ist es, eine Bearbeitungseinheit für eine Fräs- und Bohrmaschine zu schaffen, die bei vereinfachtem konstruktiven Aufbau und erhöhter Steifigkeit universellere Arbeitsvorgänge, beispielsweise Bearbeitungen während der Schwenkbewegungen des Fräskopfes, ermöglicht.

Diese Aufgabe wird erfindungsgemäß dadurch gelöst, dass der Schwenkkopf einen zur 45°-Drehachse koaxialen hohlzylindrischen Gehäuseteil aufweist, in dem der Spindelmotor befestigt ist, und dass der Kopfträger einen hohlzylindrischen Gehäuseansatz aufweist, in welchem der Gehäuseteil des Schwenkkopfes drehbar gelagert ist.

Durch die Fixierung des gesamten Spindelmotors im Schwenkkopf und durch die drehbare Lagerung des mit dem Motorgehäuse fest verbundenen hohlzylindrischen Gehäuseteils des Schwenkkopfes im Kopfträger wird erreicht, dass bei einer Verdrehung des Schwenkkopfes um die 45°-Drehachse der Spindelmotor zusammen mit dem Getriebezug und der Arbeitsspindel mitdreht, und zwar ohne Relativbewegungen der Einzelelemente dieser gesamten Baugruppe. Eine Fixierung des Schwenkkopfes in vorgegebenen Winkelposition durch formschlüssigen Eingriff von Stirnverzahnungen ist nicht vorgesehen, so dass mit der erfindungsgemäßen Bearbeitungseinheit in allen beliebigen Winkellagen und auch während einer Verdrehbewegung des Schwenkkopfes gearbeitet werden kann. Die erfindungsgemäße Anordnung des Spindelmotors und Lagerung des Schwenkkopfes im Kopfträger ermöglichen die Verwendung starker Spindelmotoren und damit auch höhere Spanleistungen bei etwa gleichen Abmessungen der Bearbeitungseinheit.

Als Verdrehantrieb des Schwenkkopfes kann ein zur 45°-Drehachse koaxialer elektrischer Direktantrieb oder ein herkömmlicher E-Motor verwendet werden, welcher über einen durch Verspannen spielfreien Zahnriementrieb und ein Stirnrad mit einem auf dem Motorgehäuse befestigten Zahnring kinematisch verbunden ist. Ein derartiger Antriebszug gewährleistet die spielfreie Übertragung hoher Drehmomente sowie ein hochgenaues Positionieren des Schwenkkopfes in vorgegebenen Winkelstellungen.

Die Lagerung des Schwenkkopfes im Gehäuse des Kopfträgers erfolgt zweckmäßig mittels eines im hohlzylindrischen Gehäuseansatz befestigten Tragrings, der in eine am hohlzylindrischen Gehäuseteils des Schwenkkopfes ausgebildeten Umfangsnut eingreift und darin mittels dreier Wälzlager gelagert ist.

Bei den gattungsgemäßen Schwenkköpfen bereitet die Zufuhr von Energie, Steuersignalen und Spülflüssigkeit zur Arbeitsspindel gewisse Schwierigkeiten aufgrund der beengten Platzverhältnisse. Eine Besonderheit besteht in dem Vorsehen eines äußeren Flexrohres zur geschützten Aufnahme der Energie- und Medienleitungen, das vom Kopfträger bogenförmig zum Gehäuse der Arbeitsspindel führt. Zweckmäßig ist dieses Flexrohr über einen verdrehbaren Winkelstutzen an den Kopfträger und über einen Adapter verschwenkbar an das Spindelgehäuse angeschlossen. Die Verschwenkbarkeit des Rohranschlusses an das Spindelgehäuse kann durch eine spezielle Ausbildung des Adapters erzielt werden, und zwar durch eine Buchse mit balligen Außenflächen, an denen ein verschwenkbarer Endring im Gleitsitz anliegt. Um die Knickbeanspruchungen der Leitungen zu verhindern, können im Adapter zweckmäßigerweise Wälzkörper, insbesondere Rollen, frei drehbar gelagert sein, an denen sich die verschiedenen Leitungen anlegen.

Weitere Besonderheiten und Vorzüge der Erfindung ergeben sich aus der Beschreibung eines Ausführungsbeispiels anhand der Zeichnung. Es zeigen:
- Fig. 1: eine Bearbeitungseinheit in perspektivischer Vorderansicht;
- Fig. 2: eine Bearbeitungseinheit im schematischen Vertikalschnitt;
- Fig. 3: das bei der Bearbeitungseinheit nach Fig. 1 verwendete Flexrohr mit beidseitigen Anschlüssen in perspektivischer Explosionsdarstellung;
- Fig. 4: einen verschwenkbaren Endanschluss des Flexrohres mit dem Adapter.

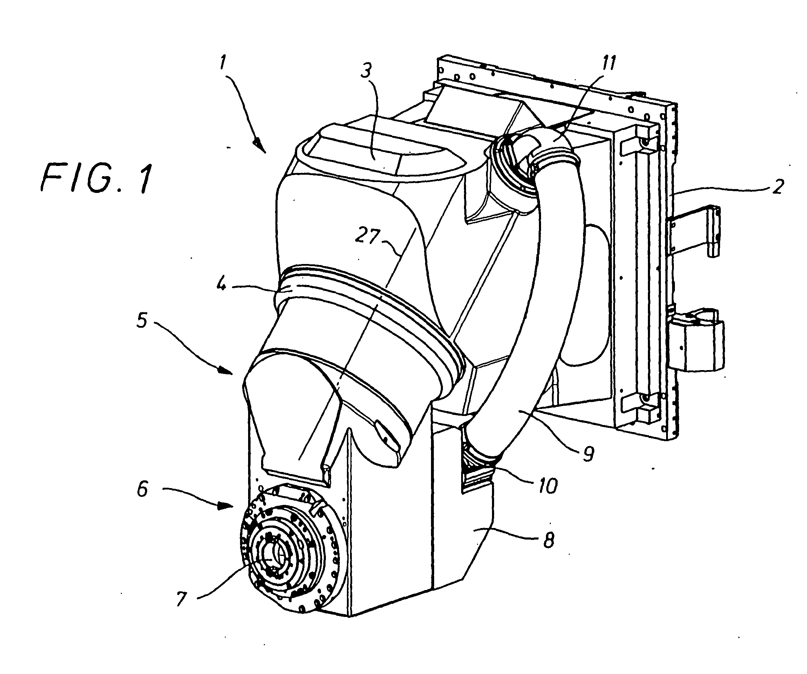

Wie aus Fig. 1 ersichtlich, weist die Bearbeitungseinheit einen abgewinkelten Kopfträger 1 auf, der eine vertikale rückwärtige platten- bzw. rahmenartige Tragkonstruktion 2, einen voluminösen Mittelteil 3 und einen nach vorne-unten unter einem Winkel von 45° geneigten hohlzylindrischen Gehäuseansatz 4 aufweist. Im Kopfträger 1 ist ein Schwenkkopf 5 um die Mittelachse 27 des hohlzylindrischen Gehäuseansatzes 4 verdrehbar gelagert, an dessen einer Seite ein Spindelkopf 6 unter einem 45°-Winkel zur Mittelachse 27 des Gehäuseansatzes 4 starr befestigt ist. Quer in diesem Spindelkopf 6 ist eine Arbeitsspindel 7 gelagert. An einem kastenförmigen Rückteil 8 des Spindelkopfes 6 ist ein Flexrohr 9 mittels eines Adapters 10 verschwenkbar angeschlossen, dessen oberes Ende über einen verdrehbaren Winkelstutzen 11 mit dem Mittelteil 3 des Kopfträgers 1 verbunden ist.

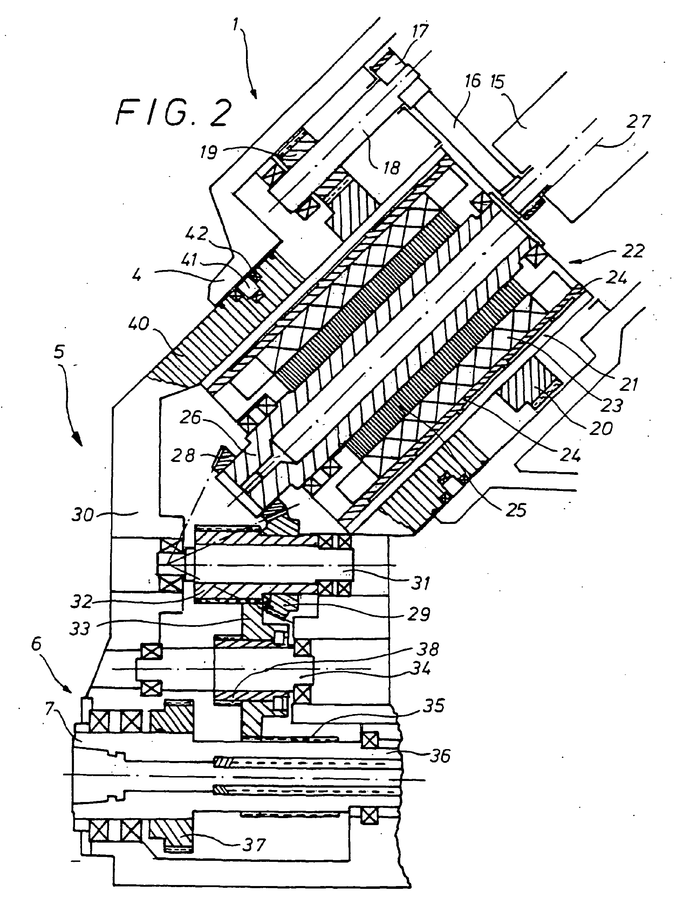

In Fig. 2 sind die inneren Funktionsteile der erfindungsgemäßen Bearbeitungseinheit in schematischem Vertikalschnitt gezeigt. Im Kopfträger 1 ist ein Verstellmotor 15 angeordnet, dessen Abtriebswelle einen Zahnriemen 16 treibt, der zum Erhalt einer ständigen Verspannung Teil eines sog. Cyclo-Getriebes ist und über zwei geringfügig gegeneinander winkelversetzte Zahnräder 17 läuft, von denen in Fig. 2 nur eines sichtbar ist. Jedes Zahnrad 17 treibt je eine im Kopfträger 1 gelagerte Welle 18 und ein darauf befestigtes Zahnritzel 19 an, die mit einem stirnverzahnten Ring 20 kämmen. Dieser Zahnring 20 ist auf dem als Hohlzylinder ausgebildeten Gehäuse 21 eines Spindelmotors 22 befestigt. Der Stator 23 dieses Spindelmotors 22 ist über eine mit Kühlkanälen versehene Hülse 24 mit dem Motorgehäuse 21 fest verbunden. Der Rotor 25 des Spindelmotors 22 sitzt fest auf einer Hohlwelle 26, deren Längsachse 27 unter einem Winkel von 45° zur Vertikalen geneigt nach schräg-unten verläuft. Auf dem vorstehenden Ende der Welle 26 sitzt fest ein Kegelzahnrad 28, das mit einem Kegelrad 29 kämmt, welches Teil einer auf einer im Gehäuse 30 des Schwenkkopfes frei drehbar gelagerten Welle 31 befestigten Zahnhülse 32 ist. Diese Zahnhülse 32 kämmt mit dem größeren Teil 33 eines Schieberades, das auf einer Vorgelegewelle 34 befestigt ist und mit einer Stirnverzahnung 35 am Außenumfang einer Arbeitsspindel 36 kämmt. Auf einem vorderen Abschnitt dieser Arbeitsspindel 36 sitzt ein größeres Zahnrad 37, das durch eine Verschiebung des Schieberads 33 auf der Vorgelegewelle 34 mit dessen kleineren Stirnrad 38 in Eingriff gelangt.

Das Gehäuse 30 des Schwenkkopfes 5 weist einen zur Drehachse 27 koaxialen Gehäuseteil 40 auf, der in den hohlzylindrischen Gehäuseansatz 4 des Kopfträgers 1 eingreift. An der Innenwandung dieses Gehäuseansatzes 4 ist ein stabiler und formsteifer Tragring 41 befestigt, der in einer im Gehäuseansatz 40 ausgebildeten Umfangsnut mittels dreier Wälzlager 42 geführt ist, welche zur Aufnahme von radialen und axialen Belastungen ausgelegt sind.

Zum horizontalen Bearbeiten eines Werkstückes wird in der in Fig. 2 dargestellten Position nach Einspannen eines Werkzeugs in die Arbeitsspindel der im Gehäuse des Schwenkkopfes 5 befestigte Spindelmotor eingeschaltet, dessen Motorwelle 26 die Arbeitsspindel 7 über das Winkelgetriebe 28, 29 und das Schaltgetriebe 33, 35 antreibt. Zum Verschwenken des Spindelkopfes 6 in eine Schräglage oder in seine Vertikalposition wird der Stellmotor 15 eingeschaltet, der über den vorgespannten Zahnriementrieb 16, 17 und das Stirnradpaar 19, 20, das Motorgehäuse 21 um die 45°-Drehachse 25 verdreht. Da das Motorgehäuse 21 mit dem hohlzylindrischen Gehäuseteil 40 des Schwenkkopfes 5 fest verbunden ist, bewirkt diese Drehung des Motors 22 eine entsprechende Verdreh- bzw. Schwenkbewegung des Schwenkkopfes 5 und auch des Spindelkopfes 6 um die 45°-Drehachse 27. Diese Dreh- bzw. Schwenkbewegung des Schwenkkopfes 5 und des Spindelkopfes 6 erfolgen unabhängig von dem Antrieb der Arbeitsspindel 7 über deren Antriebsmotor 22.

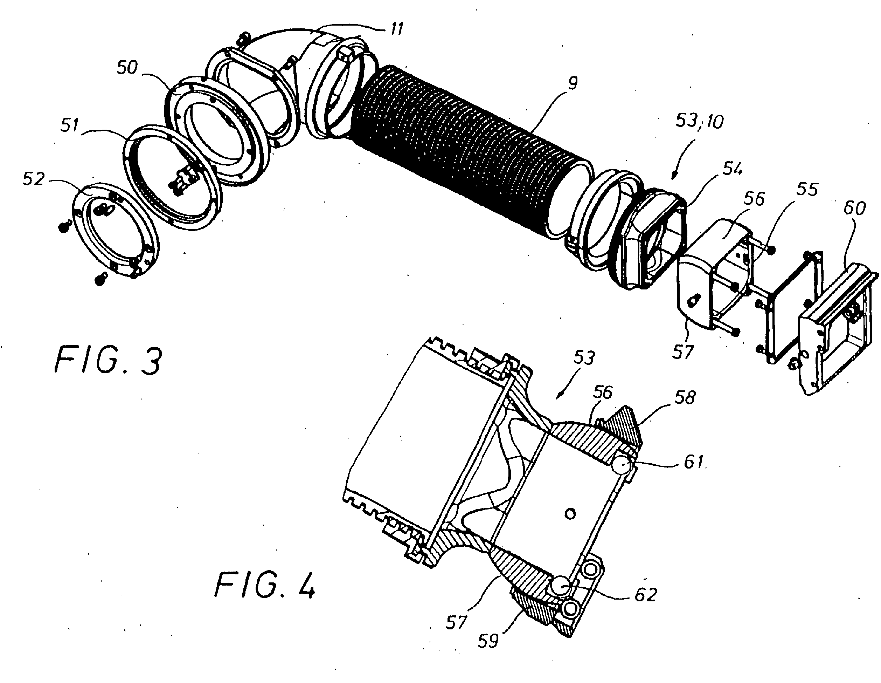

Das in den Fig. 1, 3 und 4 dargestellte Flexrohr 9 ist ein bekanntes Bauteil, das sich durch eine relativ hohe Druckfestigkeit und eine ausreichende Biegsamkeit auszeichnet. An dem in Fig. 3 oberen Ende des Flexrohres 9 wird der Winkelstutzen 11 mittels einer herkömmlichen Rohrschelle befestigt. An der Ausgangsseite des Rohrstutzens 11 werden ein Drehring 50, ein Federring 51 und ein Endring 52 montiert, so dass der Winkelstutzen 11 um die Mittelachse dieser Ringe 50, 51, 52 verdreht werden kann.

Am anderen Ende des Flexrohres 9 wird ein in Fig. 4 im Axialschnitt dargestellter Adapter 53 mittels einer herkömmlichen Rohrschelle befestigt. Dieser Adapter enthält einen im Querschnitt etwa viereckigen Ringkörper 54, in welchem ein ebenfalls viereckiger Einsatz 55 mittels Schrauben befestigt wird, dessen obere und untere Fläche 56, 57 ballig bzw. kreisbogenförmig ausgebildet sind. Auf diesen balligen Flächen 56, 57 sind das Oberteil 58 und das Unterteil 59 eines ebenfalls viereckigen Endgliedes 60 im Gleitsitz geführt, in welchem zwei seitliche Rollen 61, 62 gelagert sind. Dieses Endglied 60 ist - wie aus Fig. 1 ersichtlich - am kastenförmigen Rückteil 8 des Spindelkopfes 6 befestigt. Die Länge des Flexrohrs 9 und die Positionen der beiden Anschlüsse 10, 11 sind so gewählt, dass bei einer Bewegung des Spindelkopfes 6 um die 45°-Drehachse 27 das Flexrohr 9 seine Biegung in etwa beibehält und lediglich im Winkelkopf 11 eine Verdrehung sowie im Adapter 10 eine Verschwenkung erfolgt.

Die Erfindung ist nicht auf die vorstehend beschriebenen und dargestellten Ausführungsbeispiele beschränkt. So kann, je nach Anwendungsfall, das Schaltgetriebe 33 bis 38 entfallen und das Stirnrad 32 bei entsprechender Durchmesservergrößerung direkt mit der Verzahnung 35 auf dem Spindelkörper 36 in Eingriff gebracht werden. Hierdurch ergibt sich naturgemäß eine Verkleinerung der Bearbeitungseinheit. Statt des in Fig. 2 dargestellten Drehantriebs aus E-Motor 15, Zahnriemen 16 und verspanntem Getriebezug 17, 18, 19 für den Schwenkkopf 5 kann auch ein elektrischer Direktantrieb verwendet werden, dessen hohlzylindrischer Stator im Inneren des Kopfträgers 1 und dessen Rotor im Gehäuseteil 40 und/oder auf dem Gehäuse 21 des Spindelmotors 22 befestig sind. Zur stabilen Lagerung des Schwenkkopfes 5 im Kopfträger 6 kann statt des dargestellten Tragrings 41 mit den Wälzlagern 42 auch eine andere geeignete Lageranordnung eingesetzt werden, die in axialer und radialer Richtung hoch belastbar ist und genaue leichtgängige Drehbewegungen des Schwenkkopfes um die 45°-Drehachse 27 zulässt. Um den Schwenkkopf auch bei extrem hohen Belastungen in vorgewählten Lagen bzw. Stellungen zu fixieren, kann eine zusätzliche hydraulisch und/oder mechanisch betätigbare Klemmeinrichtung mit mindestens einem scheiben- oder hülsenförmigen Klemmelement (z.B. gemäß DE 195 22 711 C2 bzw. DE 41 22 711 A1) zwischen einem geeigneten Bauteil des Kopfträgers und dem Schwenkkopf vorgesehen sein. Ferner kann das in den Fig. 1, 3 und 4 dargestellte Flexrohr mit dem verdrehbaren Winkelstutzen und dem Schwenkbewegungen zulassenden Adapter auch bei anderen Bearbeitungseinheiten eingesetzt werden, die einen um eine 45°-Drehachse verdrehbaren Schwenkkopf mit fest angebauter Arbeitsspindel aufweisen.

## Patentansprüche

1. Bearbeitungseinheit für eine programmgesteuerte Fräs- und Bohrmaschine mit
- einem in mehreren Koordinatenachsen verfahrbaren Kopfträger (1), der eine um 45° nach vorne-unten weisende Drehachse (27) enthält,
- einem stirnseitig am Kopfträger (1) um die 45°-Drehachse (27) motorisch verdrehbar angeordneten Schwenkkopf (5),
- einem am Schwenkkopf (5) fest montierten Spindelkopf (6) mit einer Arbeitsspindel (7), deren Achse unter einem Winkel von 45° zur 45°-Drehachse (27) verläuft,
- einem koaxial zur 45°-Drehachse (27) ausgerichteten Spindelmotor (22) und
- einem im Schwenkkopf (5) angeordneten Winkelgetriebe (28, 29) für den Spindelantrieb,
**dadurch gekennzeichnet, dass**
- der Schwenkkopf (5) einen zur 45°-Drehachse (27) koaxialen hohlzylindrischen Gehäuseteil (40) aufweist, in dem der Spindelmotor (22) befestigt ist, und
- der Kopfträger (1) einen Gehäuseansatz (4) aufweist, in welchem der Gehäuseteil (40) des Schwenkkopfes (5) drehbar gelagert ist.

2. Bearbeitungseinheit nach Anspruch 1,
**dadurch gekennzeichnet, dass**
der Drehantrieb (15) zum Verdrehen des Schwenkkopfes (5) im Kopfträger (1) einen spielfrei verspannten Getriebezug mit einem Zahnriementrieb (16, 17) und einem Stirnrad (19) aufweist, das mit einem auf dem Motorgehäuse (21) befestigten Zahnring (20) ständig in Eingriff steht.

3. Bearbeitungseinheit nach Anspruch 1 oder 2,
**dadurch gekennzeichnet, dass**
dem Winkelgetriebe (28, 29) ein Mehrstufengetriebe (32, 33, 35, 37, 38) nachgeschaltet ist.

4. Bearbeitungseinheit nach einem der vorstehenden Ansprüche,
**dadurch gekennzeichnet, dass**
im hohlzylindrischen Gehäuseansatz (4) des Kopfträgers (1) mindestens ein Tragring (41) befestigt ist, der in mindestens einer am hohlzylindrischen Gehäuseteil (40) des Schwenkkopfes (5) ausgebildeten Umfangsnut gelagert ist.

5. Bearbeitungseinheit nach einem der vorstehenden Ansprüche,
**dadurch gekennzeichnet, dass**
das Gehäuse (21) des Spindelmotors (22) mit seinem vorderen etwa hälftigen Teil im Gehäuseteil (40) des Schwenkkopfes (5) befestigt ist und mit seinem hinteren den Zahnring (20) tragenden Teil in den Kopfträger (1) hineinragt.

6. Bearbeitungseinheit nach einem der vorstehenden Ansprüche,
**dadurch gekennzeichnet, dass**
ein äußeres Flexrohr (9) zur geschützten Aufnahme der Energie- und Medienleitungen vom Kopfträger (1) zum Gehäuse des Spindelkopfes (6) führt.

7. Bearbeitungseinheit nach Anspruch 6,
**dadurch gekennzeichnet, dass**
das Flexrohr (9) über einen verdrehbaren Winkelstutzen (11) an den Kopfträger (1) und über einen Adapter (10) verschwenkbar an das Gehäuse des Spindelkopfes (6) angeschlossen ist.

8. Bearbeitungseinheit nach Anspruch 7,
**dadurch gekennzeichnet, dass**
der Adapter (11) eine Buchse (55) mit balligen Außenflächen (56, 57) enthält, an denen ein schwenkbarer Endring (60) im Gleitsitz anliegt.

9. Bearbeitungseinheit nach Anspruch 7 oder 8,
**dadurch gekennzeichnet, dass**
im Adapter (53) Wälzkörper (61, 62) gelagert sind.

## Claims

1. A machining unit for a program-controlled milling and drilling machine, comprising
- a head support (1) movable in several coordinate axes and containing an axis of rotation (27) pointing forwards and downwards by 45°,
- a swivel head (5) arranged on the front face of the head support (1) and rotatable about the 45° axis of rotation (27) by means of a motor,
- a spindle nose (6) fixedly attached to the swivel head (5) and having a working spindle (7) whose axis extends at an angle of 45° relative to the 45° axis of rotation (27),
- a spindle motor (22) aligned coaxially with respect to the 45° axis of rotation (27), and
- an angular gear (28, 29) arranged in the swivel head (5) for the spindle drive,
**characterized in that**
- the swivel head (5) has a cylindrical hollow housing member (40) coaxial with respect to the 45° axis of rotation (27), in which the spindle motor (22) is mounted, and
- the head support (1) has a housing neck (4) in which the housing member (40) of the swivel head (5) is rotatably supported.

2. The machining unit according to claim 1,
**characterized in that**
in the head support (1) the rotary drive (15) for turning the swivel head (4) has a clearance-free clamped gear train including a toothed belt drive (16, 17) and a spur gear (19) which constantly engages the toothed ring (20) mounted on the motor housing (21).

3. The machining unit according to claim 1 or 2,
**characterized in that**
a multi-step gear (32, 33, 35, 37, 38) is arranged downstream of the angular gear (28, 29).

4. The machining unit according to any of the preceding claims,
**characterized in that**
in the cylindrical hollow housing neck (4) of the head support (1) at least one supporting ring (41) is mounted which is supported in at least one peripheral groove formed in the cylindrical hollow housing member (40) of the swivel head (5).

5. The machining unit according to any of the preceding claims,
**characterized in that**
the housing (21) of the spindle motor (22) is fixed via its front, approximately half portion in the housing member (40) of the swivel head (5) and projects into the head support (1) by means of its rear portion carrying the toothed ring (20).

6. The machining unit according to any of the preceding claims,
**characterized in that**
for the protected support of the energy and medium lines an external flexible pipe (9) extends from the head support (1) to the housing of the spindle nose (6).

7. The machining unit according to claim 6,
**characterized in that**
the flexible pipe (9) is connected to the head support (1) via a rotary elbow nipple (11) and is pivotably connected to the housing of the spindle nose (6) via an adapter (10).

8. The machining unit according to claim 7,
**characterized in that**
the adapter (11) contains a bush (55) having convex external surfaces (56, 57) against which a pivotable end ring (60) abuts in a sliding fit.

9. The machining unit according to claim 7 or 8,
**characterized in that**
rolling elements (61, 62) are supported in the adapter (53).

## Revendications

1. Unité d'usinage pour une machine à fraiser et à aléser programmable, comprenant
- un porte-tête (1) pouvant être déplacé sur plusieurs axes de coordonnées et possédant un axe de rotation (27) pointant à 45° vers le bas et vers l'avant
- une tête oscillante (5) disposée sur la face frontale du porte-tête (1) de manière à être mis en révolution par un moteur autour de l'axe de rotation de 45° (27),
- une tête de broche (6) montée de manière stationnaire sur la tête oscillante (5), comportant un arbre moteur (7), dont l'axe passe par un angle de 45° par rapport à l'axe de rotation de 45° (27),
- un moteur de broche (22) orienté coaxialement par rapport à l'axe de rotation de 45° (27) et
- un engrenage angulaire (28, 29) pour l'entraînement de la broche, disposé dans la tête oscillante (5),
**caractérisée en ce que**
- la tête oscillante (5) présente une partie logement (40) cylindrique creuse et coaxiale par rapport à l'axe de rotation de 45° (27), dans laquelle est fixé le moteur de la broche (22), et
- le porte-tête (1) présente une embase de logement (4), dans laquelle est positionnée la partie logement (40) de la tête oscillante (5) de manière à être rotative.

2. Unité d'usinage selon la revendication 1,
**caractérisée en ce que**
l'entraînement rotatif (15) pour la rotation de la tête oscillante (5) dans le porte-tête (1) présente un train d'engrenages haubané sans jeu, muni d'une transmission à courroie dentée (16, 17) et d'une roue droite (19), qui est constamment en prise avec une couronne dentée (20) fixée sur le carter du moteur (21).

3. Unité d'usinage selon la revendication 1 ou 2,
**caractérisée en ce que**
un démultiplicateur à plusieurs étages (32, 33, 35, 37, 38) est monté en aval de l'engrenage angulaire (28, 29).

4. Unité d'usinage selon l'une des revendications précédentes,
**caractérisée en ce que**
au moins un anneau porteur (41), placé dans au moins une rainure circulaire aménagée sur la partie logement (40) cylindrique creuse de la tête oscillante (5), est fixé dans l'embase du logement (4) cylindrique creuse du porte-tête (1).

5. Unité d'usinage selon l'une des revendications précédentes,
**caractérisée en ce que**
le carter (21) du moteur de la broche (22) est fixé avec la moitié environ de sa partie avant dans la partie logement (40) de la tête oscillante (5) et rentre avec sa partie arrière portant la couronne dentée (20) dans le porte-tête (1).

6. Unité d'usinage selon l'une des revendications précédentes,
**caractérisée en ce que**
un tube flexible externe (9) destiné à héberger les conduites d'énergie et de fluides va du porte-tête (1) au logement de la tête de broche (6).

7. Unité d'usinage selon la revendication 6,
**caractérisée en ce que**
le tube flexible (9) est raccordé au porte-tête (1) par l'intermédiaire d'un raccord en équerre rotatif (11) et au logement de la tête de broche (6) par le biais d'un adaptateur (10) de manière à pouvoir être basculé.

8. Unité d'usinage selon la revendication 7,
**caractérisée en ce que**
l'adaptateur (11) comprend un boîtier creux (55) ayant des surfaces externes convexes (56, 57), sur lesquelles s'adapte, par ajustage glissant, une bague terminale (60) orientable.

9. Unité d'usinage selon la revendication 7 ou 8,
**caractérisée en ce que**
des corps cylindriques (61, 62) sont placés dans l'adaptateur (53).
